# EUROPÄISCHE PATENTSCHRIFT

(11) **EP 2 943 518 B1**
(45) Veröffentlichungstag und Bekanntmachung des Hinweises auf die Patenterteilung: **02.11.2016**
(21) Anmeldenummer: 13811565.4
(22) Anmeldetag: 20.12.2013
(51) Int. Cl.: C08G 59/18, C08L 63/00, C08G 59/50

(54) **HÄRTER FÜR EMISSIONSARME EPOXIDHARZ-PRODUKTE**
HARDENERS FOR LOW-EMISSION EPOXY RESIN PRODUCTS
DURCISSEURS POUR PRODUITS EN RÉSINE ÉPOXYDE À FAIBLE TAUX D'ÉMISSION

(30) Priorität: 08.01.2013 EP 13150534; 08.01.2013 EP 13150545
(43) Veröffentlichungstag der Anmeldung: 18.11.2015
(73) Patentinhaber: Sika Technology AG, 6340 Baar (CH)
(72) Erfinder: KASEMI, Edis, CH-8046 Zürich (CH); KRAMER, Andreas, CH-8006 Zürich (CH); STADELMANN, Ursula, CH-8046 Zürich (CH); BURCKHARDT, Urs, CH-8049 Zürich (CH)
(74) Vertreter: Sika Patent Attorneys
(86) Internationale Anmeldenummer: PCT/EP2013/077701
(87) Internationale Veröffentlichungsnummer: WO 2014/108304

(56) Entgegenhaltungen:
- WO-A1-99/28365
- WO-A1-2007/060091
- GB-A- 1 258 454

## Beschreibung

### Technisches Gebiet

Die Erfindung betrifft das Gebiet der Härter für Epoxidharze, Epoxidharz-Produkte sowie deren Verwendung, insbesondere als Beschichtungen, Beläge und Anstriche.

### Stand der Technik

Für Beschichtungszwecke geeignete Epoxidharz-Produkte sollen eine möglichst niedrige Viskosität aufweisen, damit sie bei Umgebungstemperatur gut verarbeitbar und selbstverlaufend sind. Weiterhin sollen sie möglichst schnell und störungsfrei aushärten, auch bei feucht-kalten Bedingungen, und dabei eine ebenmässige, nichtklebrige Oberfläche ohne Trübungen, Flecken oder Krater ausbilden. Schliesslich soll eine ausgehärtete Beschichtung eine hohe Härte besitzen, um mechanischer Beanspruchung möglichst gut zu widerstehen. Für optisch anspruchsvolle Anwendungen, beispielsweise Deckbeläge von Fussböden, soll eine Beschichtung ausserdem eine möglichst geringe Neigung zum Vergilben unter Lichteinfluss aufweisen.

Um diese Eigenschaften zu erreichen, werden in Epoxidharz-Beschichtungen nach dem Stand der Technik üblicherweise aminhaltige Härter eingesetzt, die mit Epoxidharz adduktierte Amine - hauptsächlich primäre Diamine - enthalten. Durch die Adduktierung wird eine deutlich raschere Festigkeitsentwicklung der Beschichtung erzielt, und es treten weniger Blushing-Effekte auf als mit nichtadduktierten Aminen. Als "Blushing-Effekte" werden bei der Aushärtung auftretende Oberflächenmängel wie Trübungen, Flecken, Rauheit und Klebrigkeit bezeichnet, welche durch Salzbildung ("Blushing") von Aminen mit Kohlendioxid (CO₂) aus der Luft verursacht werden und besonders bei hoher Luftfeuchtigkeit und tiefen Temperaturen auftreten. Allerdings führt die Adduktierung typischerweise zu einer hohen Viskosität, weshalb solche Härter verdünnt werden müssen, damit die Beschichtung gut verarbeitet werden kann, selbstverlaufend ist und eine schöne Oberfläche entsteht. Als Verdünner werden üblicherweise Alkohole, insbesondere Benzylalkohol oder Glykole, eingesetzt.

Diese sind gegenüber Epoxidharzen unreaktiv und werden daher bei der Aushärtung nicht in die Harzmatrix eingebaut. Heutzutage werden aber zunehmend emissionsarme Produkte gewünscht, die nach der Aushärtung einen geringen Gehalt von durch Verdampfungs- oder Diffusionsprozesse freisetzbaren Substanzen aufweisen. Für emissionsarme Epoxidharz-Produkte können nicht einbaubare Verdünner deshalb nur in sehr geringer Menge oder gar nicht verwendet werden.

Anstelle von nicht einbaubaren Verdünnern kann zur Senkung der Viskosität des Härters auch mit einem niedrigen Adduktierungsgrad der Amine gearbeitet oder das Addukt durch Zugabe zusätzlicher Amine verdünnt werden. Dadurch enthält der Härter aber erhöhte Mengen an freien niedermolekularen Aminen, welche leichtflüchtig und geruchsintensiv sind und verstärkt zu Blushing-Effekten führen.

Aus dem Stand der Technik sind aminhaltige Härter auf Basis von niedrigviskosen Addukten bekannt, die mit weniger oder ganz ohne Verdünner eingesetzt werden können. Es handelt sich dabei um Addukte von Aminen mit Monoepoxiden.

In EP 1 385 896 werden Addukte aus Aminen und Polyalkylenglykol-Monoglycidylethern beschrieben. Diese Addukte sind zwar niedrigviskos, eignen sich aber nur bedingt als Härter für Epoxidharz-Beschichtungen, da sie eine ungenügende Härte und/oder Oberflächenqualität ergeben.

Ein weiteres bekanntes niedrigviskoses Addukt wird erhalten aus 1,5-Diamino-2-methylpentan und Kresylglycidylether. Es ermöglicht verdünnerarme bis verdünnerfreie Epoxidharz-Beschichtungen, welche weitgehend ohne Blushing-Effekte aushärten. Allerdings sind die Aushärtungsgeschwindigkeit bzw. der Festigkeitsaufbau sowie die Oberflächenqualität solcher Beschichtungen noch verbesserungsbedürftig. Zudem kann der Restgehalt an freiem 1,5-Diamino-2-methylpentan aufgrund dessen Flüchtigkeit und Geruch eine destillative Reinigung des Addukts notwendig machen, was apparativ aufwendig ist und den Härter stark verteuert.

Weitere Addukte aus Polyaminen und aromatischen Monoglycidylethern sind beispielsweise beschrieben in GB 1 258 454 A, WO 2007/060091 A1 oder WO 99/28365 A1.

### Darstellung der Erfindung

Aufgabe der vorliegenden Erfindung ist es daher, einen aminhaltigen Härter für emissionsarme Epoxidharz-Produkte zur Verfügung zu stellen, der niedrigviskos ist und Epoxidharz-Zusammensetzungen ermöglicht, die auch bei verhältnismässig tiefen Temperaturen nicht zu Blushing-Effekten neigen, rasch aushärten und dabei Filme von hoher Härte und Oberflächenqualität ergeben. Überraschenderweise wurde gefunden, dass der Härter nach Anspruch 1 diese Aufgabe sehr gut löst. Das im Härter nach Anspruch 1 enthaltene Addukt ist sehr niedrigviskos, ohne Destillationsschritt in einem einfachen Verfahren herstellbar, frei von leichtflüchtigen, geruchsintensiven Aminen und härtet zusammen mit handelsüblichen Epoxidharzen auch unter feucht-kalten Bedingungen, beispielsweise bei 8 °C, rasch zu Filmen von hoher Härte und schöner Oberfläche, insbesondere bemerkenswert hohem Glanz, die unter Lichteinfluss kaum vergilben. Dadurch ermöglicht der Härter nach Anspruch 1 gut verarbeitbare, selbstverlaufende Epoxidharz-Beschichtungen von hoher Qualität, auch ohne die Verwendung von nicht einbaubaren Verdünnern und geruchsintensiven Aminen.

Überraschend ist insbesondere der Umstand, dass der Härter nach Anspruch 1 meist deutlich niedrigerviskose Epoxidharz-Beschichtungen ermöglicht als ähnlich aufgebaute Härter nach dem Stand der Technik, wobei der jeweilige Festigkeitsaufbau vergleichbar schnell oder sogar schneller erfolgt, bei vergleichbar guter oder sogar deutlich besserer Oberflächenqualität. Zudem ermöglicht der Härter nach Anspruch 1 ohne Destillationsschritt Härter für Epoxidharze, welche vollständig frei sind von leichtflüchtigen, geruchsintensiven Aminen.

Mit dem Härter nach Anspruch 1 sind emissionsarme Epoxidharz-Produkte zugänglich, welche die Bedingungen für Öko-Gütesiegel, beispielsweise nach Emicode (EC1 Plus), AgBB, DIBt, Der Blaue Engel, AFSSET, RTS (M1) und US Green Building Council (LEED), erfüllen und gleichzeitig hohen Ansprüchen bezüglich Verarbeitungs- und Gebrauchseigenschaften genügen. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Härter, geeignet zum Aushärten von Epoxidharzen, enthaltend mindestens ein Addukt aus Trimethylhexamethylendiamin und Kresylglycidylether.

Als "Addukt" wird die Reaktionsmischung nach einer Additionsreaktion bezeichnet.
Mit "Poly" beginnende Substanznamen wie Polyamin, Polyol oder Polyepoxid bezeichnen Substanzen, die formal zwei oder mehr der in ihrem Namen vorkommenden funktionellen Gruppen pro Molekül enthalten. Als "primäre Aminogruppe" wird eine NH₂-Gruppe bezeichnet, die an einen organischen Rest gebunden ist und als "sekundäre Aminogruppe" wird eine NH-Gruppe bezeichnet, die an zwei organische Reste, welche auch gemeinsam Teil eines Rings sein können, gebunden ist. Als "Aminwasserstoff" werden die Wasserstoffatome von primären und sekundären Aminogruppen bezeichnet. Als "Aminwasserstoff-Equivalentgewicht" wird der Gewichtsanteil eines Härters oder eines Amins pro im Härter oder im Amin vorhandenen Aminwasserstoff bezeichnet.
Als "nicht einbaubarer Verdünner" wird eine in einem Epoxidharz lösliche und dessen Viskosität senkende Substanz bezeichnet, welche bei der Aushärtung des Epoxidharzes nicht kovalent in die Harzmatrix eingebaut wird.
Mit dem Begriff "Viskosität" wird im vorliegenden Dokument die dynamische Viskosität oder Scherviskosität bezeichnet, welche durch das Verhältnis zwischen der Schubspannung und der Scherrate (Geschwindigkeitsgefälle) definiert ist und wie in DIN EN ISO 3219 beschrieben bestimmt wird.

Als Trimethylhexamethylendiamin (TMD) insbesondere geeignet sind 2,2,4-Trimethyl-1,6-hexandiamin, 2,4,4-Trimethyl-1,6-hexandiamin sowie beliebige Gemische dieser Isomeren. Diese Addukte sind besonders gut zugänglich.

Als Kresylglycidylether geeignet sind alle isomeren Kresylglycidylether und beliebige Mischungen davon.
Besonders geeignet ist ortho-Kresylglycidylether. Diese Addukte sind besonders gut zugänglich.

Das Addukt wird insbesondere hergestellt, indem TMD und Kresylglycidylether vermischt und die Epoxidgruppen mit den Aminogruppen mit üblichen Verfahren, insbesondere bei einer Temperatur im Bereich von 40 bis 160 °C, bevorzugt 60 bis 140 °C, zur Reaktion gebracht werden.
Bevorzugt wird die Adduktierung durch langsames Zudosieren von Kresylglycidylether zu vorgelegtem TMD durchgeführt, wobei die Temperatur der Reaktanden bevorzugt im Bereich von 40 bis 160 °C, insbesondere 60 bis 140 °C, gehalten wird.
Im Ueberschuss eingesetztes bzw. nicht umgesetztes TMD kann nach der Umsetzung entfernt werden, beispielsweise destillativ, insbesondere durch Dünnschicht-Destillation. Bevorzugt wird es nicht entfernt. Dadurch ist die Herstellung des Adduktes besonders einfach. Da TMD nur wenig flüchtig und wenig geruchsintensiv ist und kaum Blushing verursacht ist ein Restgehalt an freiem TMD im Addukt unproblematisch .

Bevorzugt wird ein kommerziell erhältliches TMD eingesetzt, insbesondere Vestamin^{®} TMD (von Evonik).
Bevorzugt wird ein kommerziell erhältlicher Kresylglycidylether eingesetzt, insbesondere Araldite^{®} DY-K (von Huntsman), Polypox™ R6 (von Dow), Heloxy™ KR (von Hexion) oder Erisys^{®} GE-10 (von CVC Spec. Chem.).

Ein bevorzugtes Addukt wird hergestellt durch die Umsetzung von TMD und Kresylglycidylether in einem Molverhältnis TMD-Moleküle/Kresylglycidylether-Moleküle im Bereich von 0.9 bis 2.0, bevorzugt 0.95 bis 1.5, insbesondere 1.0 bis 1.25. Ein solches Addukt ist ohne weitere Aufarbeitung als Bestandteil des beschriebenen Härters einsetzbar und ermöglicht besonders reaktive und niedrigviskose Härter.

Bevorzugt weist das Addukt ein Aminwasserstoff-Equivalentgewicht im Bereich von 80 bis 125 g/Eq, besonders bevorzugt 90 bis 120 g/Eq, insbesondere 95 bis 115 g/Eq, auf. Ein solches Addukt ist von niedriger Viskosität und härtet mit handelsüblichen Epoxidharzen schnell und weitgehend ohne Blushing Effekte zu Filmen von hoher Härte.

Das Addukt enthält als Hauptbestandteil Monoaddukte der Formel (I) und als Nebenbestandteile Diaddukte der Formel (II) und gegebenenfalls unreagiertes TMD. Der Begriff "Addukt" schliesst dabei alle diese Bestandteile ein.

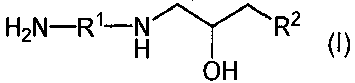

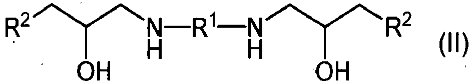

In den Formeln (I) und (II) stehen
R¹ für den difunktionellen Rest von TMD nach Entfernung seiner beiden primären Aminogruppen, und
R² für den Rest von Kresylglycidylether nach Entfernung seiner Epoxidgruppe.

Das Addukt aus TMD und Kresylglycidylether ist im Vergleich zu anderen, ähnlichen Addukten besonders niedrigviskos. Insbesondere ermöglicht es im Vergleich zu Addukten aus 1,5-Diamino-2-methylpentan und Kresylglycidylether bei gleichem Aminwasserstoff-Equivalentgewicht niedrigerviskose Epoxidharz-Beschichtungen, welche nahezu ebenso schnell oder sogar schneller Fettigkeit aufbauen und eine bessere Oberflächenqualität, insbesondere in Bezug auf den Glanzgrad, erzielen als jene.

Der beschriebene Härter ist dadurch besonders geeignet für die Verwendung in Beschichtungen. Dabei entstehen typischerweise klare Filme von hoher Härte und bemerkenswert hohem Glanz, welche auch unter schwierigen Aushärtungsbedingungen, wie hoher Luftfeuchtigkeit und/oder tiefer Temperatur, weitgehend frei sind von Blushing-Effekten und unter Lichteinfluss kaum vergilben. Der beschriebene Härter umfasst neben dem Addukt aus TMD und Kresylglycidylether bevorzugt zusätzlich mindestens ein weiteres Polyamin mit mindestens zwei gegenüber Epoxidgruppen aktiven Aminwasserstoffen.

Dafür geeignet sind insbesondere die folgenden Polyamine:
- aliphatische, cycloaliphatische oder arylaliphatische primäre Diamine, insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin, 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (= Isophorondiamin oder IPD), 2- und 4-Methyl-1,3-diaminocyclohexan und Mischungen davon, 1,3-Bis(aminomethyl)-cyclohexan, 1,4-Bis(aminomethyl)cyclohexan, 2,5(2,6)-Bis(aminomethyl)-bicyclo[2.2.1]heptan (NBDA), 3(4),8(9)-Bis(aminomethyl)tricyclo[5.2.1.0^{2,6}]-decan (TCD-Diamin), 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, sowie 1,3-Bis(aminomethyl)benzol (MXDA);
- tertiäre Aminogruppen aufweisende Polyamine mit zwei oder drei primären aliphatischen Aminogruppen, insbesondere N,N'-Bis(aminopropyl)-piperazin, N,N-Bis(3-aminopropyl)methylamin, N,N-Bis(3-aminopropyl)ethylamin, N,N-Bis(3-aminopropyl)propylamin, N,N-Bis(3-aminopropyl)cyclohexylamin, N,N-Bis(3-aminopropyl)-2-ethyl-hexylamin, Tris(2-aminoethyl)amin, Tris(2-aminopropyl)amin, Tris(3-aminopropyl)amin, sowie die Produkte aus der doppelten Cyanoethylierung und nachfolgender Reduktion von Fettaminen, welche abgeleitet sind von natürlichen Fettsäuren, wie N,N-Bis(3-aminopropyl)dodecylamin und N,N-Bis(3-aminopropyl)talgalkylamin, erhältlich als Triameen^{®} Y12D und Triameen^{®} YT (von Akzo Nobel);
- Ethergruppen-haltige aliphatische primäre Polyamine, insbesondere Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin und höhere Oligomere dieser Diamine, Bis(3-aminopropyl)polytetrahydrofurane und andere Polytetrahydrofurandiamine, cycloaliphatische ethergruppenhaltige Diamine aus der Propoxylierung und nachfolgenden Aminierung von 1,4-Dimethylolcyclohexan, erhältlich insbesondere als Jeffamine^{®} RFD-270 (von Huntsman), sowie Polyoxyalkylendi- oder -triamine, welche typischerweise Produkte aus der Aminierung von Polyoxyalkylendi- und -triolen darstellen und beispielsweise erhältlich sind unter dem Namen Jeffamine^{®} (von Huntsman), unter dem Namen Polyetheramine (von BASF) oder unter dem Namen PC Amine^{®} (von Nitroil), insbesondere Jeffamine^{®} D-230, Jeffamine^{®} D-400, Jeffamine^{®} D-2000, Jeffamine^{®} D-4000, Jeffamine^{®} T-403, Jeffamine^{®} T-3000, Jeffamine^{®} T-5000, Jeffamine^{®} EDR-104, Jeffamine^{®} EDR-148 und Jeffamine^{®} EDR-176, sowie entsprechende Amine von BASF oder Nitroil;
- primäre Diamine mit sekundären Aminogruppen, wie insbesondere 3-(2-Aminoethyl)aminopropylamin, Bis(hexamethylen)triamin (BHMT), Diethylentriamin (DETA), Triethylentetramin (TETA), Tetraethylenpentamin (TEPA), Pentaethylenhexamin (PEHA) und höhere Homologe linearer Polyethylenamine wie Polyethylenpolyamin mit 5 bis 7 Ethylenamin-Einheiten (sogenanntes "higher ethylenepolyamine", HEPA), Produkte aus der mehrfachen Cyanoethylierung oder Cyanobutylierung und anschliessender Hydrierung von primären Di- und Polyaminen mit mindestens zwei primären Aminogruppen, wie Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin oder N,N'-Bis(3-amino-1-ethylpropyl)-2-methyl-1,5-pentandiamin;
- Polyamine mit einer primären und mindestens einer sekundären Aminogruppe, wie insbesondere N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, N-(2-Aminoethyl)piperazin, N-Methyl-1,3-propandiamin, N-Butyl-1,3-propandiamin, N-(2-Ethylhexyl)-1,3-propandiamin, N-Cyclohexyl-1,3-propandiamin, 3-Methylamino-1-pentylamin, 3-Ethylamino-1-pentylamin, 3-Cyclohexylamino-1-pentylamin, Fettdiamine wie N-Cocoalkyl-1,3-propandiamin, Produkte aus der Michael-artigen Additionsreaktion von primären aliphatischen Diaminen mit Acrylnitril, Malein- oder Fumarsäurediestern, Citraconsäurediestern, Acryl- und Methacrylsäureestern, Acryl- und Methacrylsäureamiden und Itaconsäurediestern, umgesetzt im Molverhältnis 1:1, weiterhin Produkte aus der partiellen reduktiven Alkylierung von primären Polyaminen mit Aldehyden oder Ketonen, insbesondere N-Monoalkylierungsprodukte der bereits erwähnten Polyamine mit zwei primären Aminogruppen, insbesondere von 1,6-Hexandiamin, 1,5-Diamino-2-methylpentan, 1,3-Bis(aminomethyl)cyclohexan, 1,4-Bis(aminomethyl)cyclohexan, 1,3-Bis(aminomethyl)benzol, BHMT, DETA, TETA, TEPA, DPTA, N3-Amin und N4-Amin, wobei als Alkylgruppe Benzyl, Isobutyl, Hexyl und 2-Ethylhexyl bevorzugt sind, sowie weiterhin partiell styrolisierte Polyamine, insbesondere das kommerziell erhältliche Gaskamine^{®} 240 (von Mitsubishi Gas Chemical);
- sekundäre Diamine, wie insbesondere N,N'-Dialkylierungsprodukte der bereits erwähnten Polyamine mit zwei primären Aminogruppen, insbesondere N,N'-Dialkylierungsprodukte von 1,6-Hexandiamin, 1,5-Diamino-2-methylpentan, 1,3-Bis(aminomethyl)cyclohexan, 1,4-Bis(aminomethyl)cyclohexan, 1,3-Bis(aminomethyl)benzol, BHMT, DETA, TETA, TEPA, DPTA, N3-Amin oder N4-Amin, wobei als Alkylgruppen 2-Phenylethyl, Benzyl, Isobutyl, Hexyl und 2-Ethylhexyl bevorzugt sind.

In einer Ausführungsform enthält der beschriebene Härter als zusätzliches weiteres Polyamin mit mindestens zwei gegenüber Epoxidgruppen aktiven Aminwasserstoffen ein Polyamin mit mindestens zwei primären aliphatischen Aminogruppen. Ein solcher Härter ermöglicht Epoxidharz-Beschichtungen mit einem besonders schnellen Festigkeitsaufbau.
Bevorzugt ist das Polyamin mit mindestens zwei primären aliphatischen Aminogruppen ausgewählt aus der Gruppe bestehend aus Isophorondiamin, 1,3-Bis(aminomethyl)cyclohexan, 1,4-Bis(aminomethyl)cyclohexan, Bis(4-aminocyclohexyl)methan, Bis(4-amino-3-methylcyclohexyl)methan, NBDA, TCD-Diamin, MXDA und Ethergruppen-haltigen Polyaminen mit einem mittleren Molekulargewicht bis zu 500 g/mol. Diese Polyamine sind kommerziell erhältlich und ermöglichen Härter für Epoxidharze, welche frei sind von besonders leichtflüchtigen Aminen.
Davon besonders bevorzugt sind die Ethergruppen-haltigen Polyamine, insbesondere Jeffamine^{®} D-230 (von Huntsman) oder entsprechende Amine von BASF oder Nitroil, sowie Jeffamine^{®} RFD-270 (von Huntsman). Die Ethergruppen-haltigen Polyamine ermöglichen Epoxidharz-Beschichtungen mit besonders niedriger Viskosität, schneller Aushärtung und hoher Schlagzähigkeit.

In einer weiteren Ausführungsform enthält der beschriebene Härter als zusätzliches weiteres Polyamin mit mindestens zwei gegenüber Epoxidgruppen aktiven Aminwasserstoffen mindestens ein Polyamin mit mindestens einer sekundären Aminogruppe.
Bevorzugt als Polyamin mit mindestens einer sekundären Aminogruppe sind N-monoalkylierte und N,N'-dialkylierte primäre Polyamine mit zwei primären aliphatischen Aminogruppen und Mischungen davon, wie sie insbesondere durch reduktive Alkylierung von primären Polyaminen mit Aldehyden oder Ketonen und Wasserstoff erhalten werden. Dabei sind Aldehyde gegenüber Ketonen bevorzugt. Und dabei werden die Carbonylgruppen der Aldehyde oder Ketone in Bezug auf die primären Aminogruppen des Polyamins leicht unterstöchiometrisch oder stöchiometrisch eingesetzt.
Weitere bevorzugte Polyamine mit mindestens einer sekundären Aminogruppe sind Produkte aus der partiellen Styrolisierung von primären Diaminen, wie insbesondere Gaskamine^{®} 240 (von Mitsubishi Gas Chemical).
Ein solcher Härter ermöglicht Epoxidharz-Beschichtungen mit besonders niedriger Viskosität und und besonders hoher Schlagzähigkeit.

Bevorzugt ist das Polyamin mit mindestens einer sekundären Aminogruppe ausgewählt aus der Gruppe bestehend aus N-monoalkyliertem und N,N'-dialkyliertem 1,6-Hexandiamin, 1,5-Diamino-2-methylpentan, 1,3-Bis(aminomethyl)cyclohexan, 1,4-Bis(aminomethyl)cyclohexan, 1,3-Bis(aminomethyl)benzol, BHMT, DETA, TETA, TEPA, DPTA, N3-Amin und N4-Amin, mit den Alkylgruppen Benzyl, 2-Phenylethyl, Isobutyl, Hexyl oder 2-Ethylhexyl. Dabei sind beliebige Kombinationen zwischen den genannten Aminen und den genannten Alkylgruppen möglich.
Diese Polyamine ermöglichen Epoxidharz-Produkte mit besonders niedriger Viskosität, hoher Oberflächenqualität und besonders hoher Schlagzähigkeit. Davon bevorzugt sind mono- und dibenzyliertes 1,3-Bis(aminomethyl)benzol, mono- und di-2-ethylhexyliertes 1,3-Bis(aminomethyl)benzol und partiell styrolisiertes 1,3-Bis(aminomethyl)benzol, wie insbesondere Gaskamine^{®} 240 (von Mitsubishi Gas Chemical). Diese arylaliphatischen Polyamine sind besonders gut verträglich mit handelsüblichen Epoxidharzen und ermöglichen Epoxidharz-Produkte mit schnellem Festigkeitsaufbau und sehr hoher Oberflächenqualität.

Es kann vorteilhaft sein, wenn zusätzlich zum Addukt aus TMD und Kresylglycidylether sowohl mindestens ein Polyamin mit mindestens zwei primären aliphatischen Aminogruppen als auch ein Polyamin mit mindestens einer sekundären Aminogruppe im Härter vorhanden sind. Solche Härter ermöglichen Epoxidharzprodukte mit besonders niedriger Viskosität, schnellem Festigkeitsaufbau und besonder hoher Schlagzähigkeit. Besonders bevorzugt sind Kombinationen von Ethergruppen-haltigen Polyaminen mit N-monoalkylierten und/oder N,N'-dialkylierten primären Diaminen.

Ein bevorzugter Härter enthält das Addukt aus TMD und Kresylglycidylether in einer solchen Menge, dass 5 bis 90%, bevorzugt 10 bis 80%, insbesondere 15 bis 70%, der gegenüber Epoxidgruppen reaktiven Aminwasserstoffe im Härter vom Addukt stammen. Ein solcher Härter weist eine gute Balance zwischen niedriger Viskosität, schneller Aushärtung und hoher Schlagzähigkeit auf.

Der Härter kann weiterhin aromatische Polyamine enthalten, insbesondere mund p-Phenylendiamin, 4,4'-, 2,4' und 2,2'-Diaminodiphenylmethan, 3,3'-Dichloro-4,4'-diaminodiphenylmethan (MOCA), 2,4- und 2,6-Toluylendiamin, Mischungen von 3,5-Dimethylthio-2,4- und -2,6-toluylendiamin (erhältlich als Ethacure^{®} 300 von Albermarle), Mischungen von 3,5-Diethyl-2,4- und -2,6-toluylendiamin (DETDA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzolsulfonamid, 5,5'-Methylendianthranilsäure, Dimethyl-(5,5'-methylendianthranilat), 1,3-Propylen-bis(4-aminobenzoat), 1,4-Butylen-bis(4-aminobenzoat), Polytetramethylenoxid-bis(4-aminobenzoat) (erhältlich als Versalink^{®} von Air Products), 1,2-Bis(2-aminophenylthio)ethan, 2-Methylpropyl-(4-chloro-3,5-diaminobenzoat) oder tert.Butyl-(4-chloro-3,5-diaminobenzoat).

Der Härter kann weiterhin zusätzliche Addukte enthalten, insbesondere Addukte von TMD mit Diepoxiden oder andern Monoepoxiden als Kresylglycidylether, oder Addukte von andern primären Diaminen mit Mono- oder Diepoxiden, sowie Umsetzungsprodukte aus Aminen und Epichlorhydrin, insbesondere jenes von 1,3-Bis(aminomethyl)benzol, kommerziell erhältlich als Gaskamine^{®} 328 (von Mitsubishi Gas Chemical).

Der Härter kann weiterhin Polyamidoamine enthalten, welche Umsetzungsprodukte aus einer ein- oder mehrwertigen Carbonsäure, beziehungsweise deren Ester oder Anhydride, insbesondere einer Dimerfettsäure, und einem im stöchiometrischen Überschuss eingesetzten aliphatischen, cycloaliphatischen oder aromatischen Polyamin, insbesondere einem Polyalkylenamin wie beispielsweise DETA oder TETA, darstellen, insbesondere die kommerziell erhältlichen Polyamidoamine Versamid^{®} 100, 125, 140 und 150 (von Cognis), Aradur^{®} 223, 250 und 848 (von Huntsman), Euretek^{®} 3607 und 530 (von Huntsman) und Beckopox^{®} EH 651, EH 654, EH 655, EH 661 und EH 663 (von Cytec).

Der Härter kann weiterhin Phenalkamine, auch Mannich-Basen genannt, welche Umsetzungsprodukte einer Mannich-Reaktion von Phenolen, insbesondere Cardanol, mit Aldehyden, insbesondere Formaldehyd, und Polyaminen darstellen, enthalten, insbesondere die kommerziell erhältlichen Phenalkamine Cardolite^{®} NC-541, NC-557, NC-558, NC-566, Lite 2001 und Lite 2002 (von Cardolite), Aradur^{®} 3440, 3441, 3442 und 3460 (von Huntsman) und Beckopox^{®} EH 614, EH 621, EH 624, EH 628 und EH 629 (von Cytec).

Der Härter kann weiterhin Monoamine wie Hexylamin und Benzylamin enthalten.
Der Härter kann weiterhin Mercaptogruppen aufweisende Verbindungen, enthalten, insbesondere die Folgenden:
- flüssige Mercaptan-terminierte Polysulfid-Polymere, bekannt unter dem Markennamen Thiokol^{®} (von Morton Thiokol; beispielsweise erhältlich von SPI Supplies, oder von Toray Fine Chemicals), insbesondere die Typen LP-3, LP-33, LP-980, LP-23, LP-55, LP-56, LP-12, LP-31, LP-32 und LP-2; sowie weiterhin bekannt unter dem Markennamen Thioplast^{®} (von Akzo Nobel), insbesondere die Typen G 10, G 112, G 131, G 1, G 12, G 21, G 22, G 44 und G 4;
- Mercaptan-terminierte Polyoxyalkylen-Ether, erhältlich beispielsweise durch Umsetzung von Polyoxyalkylendi- und -triolen entweder mit Epichlorhydrin oder mit einem Alkylenoxid, gefolgt von Natriumhydrogensulfid;
- Mercaptan-terminierte Verbindungen in Form von Polyoxyalkylen-Derivaten, bekannt unter dem Markennamen Capcure^{®} (von Cognis), insbesondere die Typen WR-8, LOF und 3-800;
- Polyester von Thiocarbonsäuren, beispielsweise Pentaerythritoltetramercaptoacetat, Trimethylolpropantrimercaptoacetat, Glykoldimercaptoacetat, Pentaerythritoltetra-(3-mercaptopropionat), Trimethylolpropantri-(3-mercaptopropionat) und Glykoldi-(3-mercaptopropionat), sowie die Veresterungsprodukte von Polyoxyalkylendiolen und -triolen, ethoxyliertem Trimethylolpropan und Polyester-Diolen mit Thiocarbonsäuren wie Thioglykolsäure und 2- oder 3-Mercaptopropionsäure; und
- weitere Mercaptogruppen aufweisende Verbindungen, wie insbesondere 2,4,6-Trimercapto-1,3,5-triazin, 2,2'-(Ethylendioxy)-diethanthiol (Triethylenglykol-dimercaptan) und Ethandithiol.

Der Härter kann weiterhin mindestens einen Beschleuniger enthalten. Als Beschleuniger geeignet sind Substanzen, welche die Reaktion zwischen Aminogruppen und Epoxidgruppen beschleunigen, insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; weiterhin tertiäre Amine wie insbesondere 1,4-Diazabicyclo[2.2.2]octan, Benzyldimethylamin, α-Methylbenzyldimethylamin, Triethanolamin, Dimethyl-aminopropylamin, Imidazole wie insbesondere N-Methylimidazol, N-Vinylimidazol oder 1,2-Dimethylimidazol, Salze solcher tertiären Amine, quaternäre Ammoniumsalze, wie insbesondere Benzyltrimethylammoniumchlorid, Amidine wie insbesondere 1,8-Diazabicyclo[5.4.0]undec-7-en, Guanidine wie insbesondere 1,1,3,3-Tetramethylguanidin, Phenole, insbesondere Bisphenole, Phenol-Harze, und Mannich-Basen wie insbesondere 2-(Dimethylaminomethyl)phenol, 2,4,6-Tris(dimethylaminomethyl)phenol und Polymere aus Phenol, Formaldehyd und N,N-Dimethyl-1,3-propandiamin, Phosphite wie insbesondere Di- und Triphenylphosphite, sowie Mercaptogruppen aufweisende Verbindungen.
Bevorzugte Beschleuniger sind Säuren, tertiäre Amine oder Mannich-Basen. Besonders bevorzugt sind Salicylsäure und/oder 2,4,6-Tris(dimethylaminomethyl)phenol.

Der Härter kann weiterhin mindestens einen nicht einbaubaren Verdünner enthalten, insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykol-monomethylether, Diethylenglykol-monoethylether, Diethylenglykol-mono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, N-Methylpyrrolidon, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol und 8,11,14-Pentadecatrienylphenol (Cardanol, aus Cashewschalen-Öl, erhältlich beispielsweise als Cardolite NC-700 von Cardolite Corp., USA), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide. Bevorzugt sind Benzylalkohol, Dodecylphenol, tert.Butylphenol, styrolisiertes Phenol, ethoxyliertes Phenol oder phenolgruppenhaltige aromatische Kohlenwasserstoffharze, insbesondere die Novares^{®}-Typen LS 500, LX 200, LA 300 und LA 700 (von Rütgers).

Bevorzugt enthält der Härter keinen oder nur einen geringen Gehalt an nicht einbaubaren Verdünnern, besonders bevorzugt weniger als 25 Gewichts-%, insbesondere weniger als 10 Gewichts-% und am meisten bevorzugt weniger als 5 Gewichts-%. Insbesondere werden dem Härter keine nicht einbaubaren Verdünner zugesetzt.

Ein weiterer Gegenstand der Erfindung ist eine Epoxidharz-Zusammensetzung, enthaltend mindestens ein Epoxidharz und den vorgängig beschriebenen Härter.

Als Epoxidharz sind übliche technische Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.
Als Epoxidharz besonders geeignet sind sogenannte Polyepoxid-Flüssigharze, im folgenden als "Flüssigharz" bezeichnet. Diese weisen eine Glasübergangstemperatur unterhalb von 25°C auf.
Ebenfalls möglich als Epoxidharz sind sogenannte Festharze, welche eine Glasübergangstemperatur oberhalb von 25°C aufweisen und sich zu bei 25°C schüttfähigen Pulvern zerkleinern lassen.

Geeignete Epoxidharze sind insbesondere aromatische Epoxidharze, insbesondere die Glycidylisierungsprodukte von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- und 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)methan, 2,2-Bis(4-hydroxy-3-methylyphenyl)propan (Bisphenol-C), Bis-(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis-(3,5-dimethyl-4-hydroxyphenyl)-2-methylbutan, 1,1-Bis(4-hydroxyphenyl)-cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylenbis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂-bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromo-neopentylglykol, Rizinusöl, Trimethylolpropan, Trimethylolethan, Pentaerythrol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, sowie Umsetzungsprodukte von Epichlorhydrin und Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Bevorzugte ist das Epoxidharz ein Flüssigharz auf der Basis eines Bisphenols, insbesondere ein Diglycidylether von Bisphenol-A, Bisphenol-F oder Bisphenol-A/F, wie sie kommerziell beispielsweise von Dow, Huntsman und Hexion erhältlich sind. Diese Flüssigharze weisen eine für Epoxidharze niedrige Viskosität und im ausgehärteten Zustand gute Eigenschaften als Beschichtung auf. Sie können gegebenenfalls in Kombination mit Bisphenol A-Festharz oder Bisphenol-F-Novolak-Epoxidharz vorhanden sein.

Das Epoxidharz kann einen Reaktiwerdünner, insbesondere einen mindestens eine Epoxidgruppe aufweisenden Reaktiwerdünner, enthalten. Als Reaktivverdünner geeignet sind beispielsweise die Glycidylether von ein- oder mehrwertigen Phenolen oder aliphatischen oder cycloaliphatischen Alkoholen, wie insbesondere die bereits genannten Polyglycidylether von Di- oder Polyolen, sowie weiterhin insbesondere Phenylglycidylether, Kresylglycidylether, Benzylglycidylether, p-n-Butyl-phenylglycidylether, p-tert.Butyl-phenylglycidylether, Nonylphenylglycidylether, Allylglycidylether, Butylglycidylether, Hexylglycidylether, 2-Ethylhexylglycidylether, sowie Glycidylether von natürlichen Alkoholen, wie zum Beispiel C₈- bis C₁₀-Alkylglycidylether oder C₁₂- bis C₁₄-Alkylglycidylether. Die Zugabe eines Reaktivverdünners zum Epoxidharz bewirkt eine Reduktion der Viskosität, sowie eine Reduktion der Glasübergangstemperatur und der mechanischen Werte.

Gegebenenfalls enthält die Epoxidharz-Zusammensetzung weitere Bestandteile, insbesondere in Epoxidharz-Zusammensetzungen üblicherweise eingesetzte Hilfs- und Zusatzstoffe, beispielsweise die Folgenden:
- Lösemittel, Verdünner, Filmbildehilfsmittel oder Extender, wie insbesondere die bereits genannten nicht einbaubaren Verdünner;
- Reaktivverdünner, insbesondere Epoxidgruppen aufweisende Reaktivverdünner, wie sie vorgängig erwähnt wurden, epoxidiertes Sojaöl oder Leinöl, Acetoacetatgruppen aufweisende Verbindungen, insbesondere acetoacetylierte Polyole, Butyrolakton, Carbonate, Aldehyde, sowie weiterhin Isocyanate und Reaktivgruppen-aufweisende Silikone;
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere chlorsulfonierte Polyethylene und Fluor-haltige Polymere, Sulfonamid-modifizierte Melamine und gereinigte Montan-Wachse;
- anorganische und organische Füllstoffe, zum Beispiel gemahlene oder gefällte Calciumcarbonate, welche gegebenenfalls mit Fettsäuren, insbesondere Stearaten, beschichtet sind, Baryt (Schwerspat), Talke, Quarzmehle, Quarzsand, Eisenglimmer, Dolomite, Wollastonite, Kaoline, Mica (Kalium-Aluminium-Silikat), Molekularsiebe, Aluminiumoxide, Aluminiumhydroxide, Magnesiumhydroxid, Kieselsäuren, Zemente, Gipse, Flugaschen, Russ, Graphit, Metall-Pulver wie Aluminium, Kupfer, Eisen, Zink, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid und/oder Eisenoxide;
- die vorgenannten Beschleuniger;
- Rheologie-Modifizierer, insbesondere Verdicker oder Antiabsetzmittel;
- Haftverbesserer, insbesondere Organoalkoxysilane;
- Stabilisatoren gegen Oxidation, Wärme, Licht und UV-Strahlung;
- flammhemmende Substanzen, insbesondere Aluminiumhydroxid (ATH), Magnesiumdihydroxid (MDH), Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinot-diphosphat-Oligomer, Tetraphenylresorcinoldiphosphit, Ethylendiamindiphosphat oder Bisphenol-A-bis(diphenylphosphat), Tris(chloroethyl)phosphat, Tris(chloropropyl)phosphat und Tris(dichloroisopropyl)phosphat, Tris[3-bromo-2,2-bis(bromomethyl)propyl]phosphat, Tetrabromo-Bisphenol-A, Bis(2,3-dibromopropylether) von Bisphenol A, bromierte Epoxidharze, Ethylen-bis-(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine;
- oberflächenaktive Substanzen, insbesondere Netzmittel, Verlaufsmittel, Entlüftungsmittel und/oder Entschäumer;
- Biozide, wie beispielsweise Algizide, Fungizide oder das Pilzwachstum hemmende Substanzen.

Bevorzugt enthält die Epoxidharz-Zusammensetzung weitere Hilfs- und Zusatzstoffe, insbesondere Netzmittel, Verlaufsmittel, Entschäumer, Stabilisatoren, Pigmente und/oder Beschleuniger, insbesondere Salicylsäure und/oder 2,4,6-Tris(dimethylaminomethyl)phenol.

Bevorzugt enthält die Epoxidharz-Zusammensetzung keinen oder nur einen geringen Gehalt an nicht einbaubaren Verdünnern, besonders bevorzugt weniger als 10 Gewichts-%, insbesondere weniger als 5 Gewichts-%, am meisten bevorzugt weniger als 2 Gewichts-%.

In der Epoxidharz-Zusammensetzung liegt das Verhältnis der Anzahl von gegenüber Epoxidgruppen reaktiven Gruppen gegenüber der Anzahl Epoxidgruppen bevorzugt im Bereich von 0.5 bis 1.5, insbesondere 0.7 bis 1.2.

Die in der Epoxidharz-Zusammensetzung vorhandenen Aminwasserstoffe und gegebenenfalls vorhandene weitere gegenüber Epoxidgruppen reaktive Gruppen reagieren mit den Epoxidgruppen unter deren Ringöffnung (Additionsreaktion). Als Ergebnis dieser Reaktionen polymerisiert die Zusammensetzung und härtet schliesslich aus. Dem Fachmann ist bekannt, dass primäre Aminogruppen gegenüber Epoxidgruppen difunktionell sind und eine primäre Aminogruppe somit als zwei gegenüber Epoxidgruppen reaktive Gruppen zählt.

Insbesondere ist die Epoxidharz-Zusammensetzung eine zweikomponentige Zusammensetzung, bestehend aus
(i) einer Harz-Komponente enthaltend mindestens ein Epoxidharz und
(ii) einer Härter-Komponente enthaltend den beschriebenen Härter.

Die Komponenten der zweikomponentigen Zusammensetzung werden jeweils in einem eigenen Gebinde gelagert. Weitere Bestandteile der zweikomponentigen Epoxidharz-Zusammensetzung können als Bestandteil der Harz- oder der Härter-Komponente vorhanden sein, wobei gegenüber Epoxidgruppen reaktive weitere Bestandteile bevorzugt ein Bestandteil der Härter-Komponente sind. Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern. Zur Anwendung der zweikomponentigen Epoxidharz-Zusammensetzung werden die Harz- und die Härter-Komponente kurz vor oder während der Applikation miteinander vermischt. Das Mischungsverhältnis zwischen den beiden Komponenten wird bevorzugt so gewählt, dass die gegenüber Epoxidgruppen reaktiven Gruppen der Härter-Komponente in einem geeigneten Verhältnis zu den Epoxidgruppen der Harz-Komponente stehen, wie vorgängig beschrieben. In Gewichtsteilen liegt das Mischungsverhältnis zwischen der Harz-Komponente und der Härter-Komponente üblicherweise im Bereich von 1:10 bis 10:1.

Die Vermischung der beiden Komponenten erfolgt mittels eines geeigneten Verfahrens; sie kann kontinuierlich oder batchweise erfolgen. Falls das Vermischen vor der Applikation erfolgt, muss darauf geachtet werden, dass zwischen dem Vermischen der Komponenten und der Applikation nicht zu viel Zeit vergeht, da es dadurch zu Störungen, wie beispielsweise einem verlangsamten oder unvollständigen Aufbau der Haftung zum Substrat, kommen kann. Die Vermischung erfolgt insbesondere bei Umgebungstemperatur, welche typischerweise im Bereich von etwa 5 bis 50°C, bevorzugt bei etwa 10 bis 30°C, liegt.

Mit der Vermischung der beiden Komponenten beginnt die Aushärtung durch chemische Reaktion, wie vorgängig beschrieben. Die Aushärtung erfolgt insbesondere bei Umgebungstemperatur. Sie erstreckt sich typischerweise über einige Tage bis Wochen, bis sie unter den gegebenen Bedingungen weitgehend abgeschlossen ist. Die Dauer hängt unter anderem von der Temperatur, der Reaktivität der Bestandteile und deren Stöchiometrie sowie der Gegenwart von Beschleunigern ab.

Ein weiterer Gegenstand der Erfindung ist somit auch eine ausgehärtete Zusammensetzung erhalten aus der Aushärtung einer Epoxidharz-Zusammensetzung wie im vorliegenden Dokument beschrieben.

Die Applikation der Epoxidharz-Zusammensetzung erfolgt auf mindestens ein Substrat, wobei die Folgenden besonders geeignet sind:
- Glas, Glaskeramik, Beton, Mörtel, Backstein, Ziegel, Gips und Natursteine wie Granit oder Marmor;
- Metalle und Legierungen, wie Aluminium, Eisen, Stahl oder Buntmetalle, inklusive oberflächenveredelte Metalle oder Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe, insbesondere Hart- und Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke.

Die Substrate können bei Bedarf vor dem Applizieren der Epoxidharz-Zusammensetzung vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten und/oder Abblasen, sowie weiterhin Behandeln mit Reinigern oder Lösemitteln oder das Aufbringen eines Haftvermittlers, einer Haftvermittlerlösung oder eines Primers.

Die beschriebene Epoxidharz-Zusammensetzung ist vorteilhaft verwendbar als Bestandteil von Faserverbundwerkstoffen (Composites), als Vergussmasse, Dichtstoff, Klebstoff, Belag, Beschichtung, Anstrich, Lack, Versiegelung, Grundierung oder Primer.
Insbesondere verwendbar ist sie als Vergussmasse, Dichtstoff und Klebstoff, wie beispielsweise als Elektrovergussmasse, Abdichtungsmasse, Karrosserieklebstoff, Sandwichelementklebstoff, Halbschalenklebstoff, beispielsweise für Rotorblätter von Windkraftanlagen, Brückenelementklebstoff oder Verankerungsklebstoff; sowie weiterhin als Belag, Beschichtung, Anstrich, Lack, Versiegelung, Grundierung und Primer für Bau- und Industrieanwendungen, wie insbesondere als Bodenbelag und Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle, Kunststoffe oder Holz, beispielsweise zur Oberflächenversiegelung von Holzkonstruktionen, Fahrzeugen, Ladeflächen, Tanks, Silos, Schächten, Rohrleitungen, Pipelines, Maschinen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden; sowie weiterhin als Voranstrich, Haftanstrich, Korrosionsschutz-Primer oder zur Hydrophobierung von Oberflächen. Auf die vollständig oder teilweise ausgehärtete Epoxidharz-Zusammensetzung kann insbesondere bei ihrer Verwendung als Beschichtung, Belag oder Anstrich eine weitere Beschichtung, ein weiterer Belag, oder ein weiterer Anstrich appliziert werden, wobei es sich bei dieser weiteren Schicht ebenfalls um eine Epoxidharz-Zusammensetzung handeln kann, aber auch um ein anderes Material, insbesondere um eine Polyurethan- oder Polyharnstoff-Beschichtung.

Besonders vorteilhaft verwendbar ist die beschriebene Epoxidharz-Zusammensetzung als Beschichtung. Als Beschichtung werden dabei flächig aufgebrachte Beläge aller Art verstanden, insbesondere auch Anstriche, Lacke, Versiegelungen, Grundierungen und Primer, wie vorgängig beschrieben. Insbesondere vorteilhaft verwendbar ist die beschriebene Epoxidharz-Zusammensetzung in emissionsarmen Produkten mit Öko-Gütesiegeln, beispielsweise nach Emicode (EC1 Plus), AgBB, DIBt, Der Blaue Engel, AFSSET, RTS (M1) und US Green Building Council (LEED).

Als Beschichtung wird die Epoxidharz-Zusammensetzung vorteilhaft in einem Verfahren zum Beschichten verwendet, wobei sie eine flüssige Konsistenz mit niedriger Viskosität und guten Verlaufseigenschaften aufweist und insbesondere als selbstverlaufende Beschichtung auf überwiegend ebene Flächen oder als Anstrich appliziert werden kann. Bevorzugt weist die Epoxidharz-Zusammensetzung bei dieser Applikation unmittelbar nach dem Vermischen der Harz- und der Härter-Komponente eine Viskosität, gemessen bei 20°C, im Bereich von 300 bis 3'000 mPa·s, bevorzugt im Bereich von 300 bis 2'000 mPa·s, besonders bevorzugt im Bereich von 300 bis 1'500 mPa·s, auf. Die vermischte Zusammensetzung wird innerhalb der Verarbeitungszeit flächig als dünner Film mit einer Schichtdicke von typischerweise etwa 50 µm bis etwa 5 mm auf ein Substrat appliziert, typischerweise bei Umgebungstemperatur. Die Applikation erfolgt insbesondere durch Aufgiessen auf das zu beschichtende Substrat und anschliessendem gleichmässigem Verteilen mit Hilfe beispielsweise eines Rakels oder einer Zahntraufel. Die Applikation kann aber auch mit einem Pinsel oder Roller oder als Spritzapplikation erfolgen, beispielsweise als Korrosionsschutzbeschichtung auf Stahl.
Bei der Aushärtung entstehen typischerweise weitgehend klare, glänzende und nichtklebrige Filme von hoher Härte, welche eine gute Haftung zu verschiedensten Substraten aufweisen.

Ein weiterer Gegenstand der Erfindung ist ein Artikel enthaltend eine ausgehärtete Zusammensetzung, erhalten durch die Aushärtung der beschriebenen Epoxidharz-Zusammensetzung. Die ausgehärtete Zusammensetzung liegt dabei insbesondere in Form einer Beschichtung vor.

Die beschriebene Epoxidharz-Zusammensetzung zeichnet sich durch vorteilhafte Eigenschaften aus. Sie ist niedrigviskos und härtet auch bei feucht-kalten Bedingungen schnell und weitgehend ohne Blushing-Effekte aus, sogar mit geringen Anteilen oder ganz ohne die Verwendung von nicht einbaubaren Verdünnern, und insbesondere auch mit nur geringen Anteilen oder ganz ohne die Verwendung von leichtflüchtigen, geruchsintensiven Aminen. Dabei entstehen klare, nichtklebrige Filme von hoher Härte und Oberflächenqualität, insbesondere bemerkenswert hohem Glanz, welche unter Lichteinfluss kaum vergilben. Mit der beschriebenen Epoxidharz-Zusammensetzung sind insbesondere emissionsarme Epoxidharz-Produkte zugänglich, welche die Bedingungen für viele Öko-Gütesiegel erfüllen und gleichzeitig hohen Ansprüchen bezüglich Arbeitssicherheit, Verarbeitungs- und Gebrauchseigenschaften genügen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"AHEW" steht für das Aminwasserstoff-Equivalentgewicht.
"EEW" steht für das Epoxid-Equivalentgewicht.

### 1. Beschreibung der Messmethoden

Die Viskosität wurde auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) gemessen.

### 2. Verwendete kommerzielle Substanzen:

- Araldite^{®} DY-K: (von Huntsman), Kresylglycidylether, EEW ca. 182 g/Eq
- Araldite^{®} GY 250: (von Huntsman), Bisphenol-A-Diglycidylether,EEW ca. 187.5 g/Eq
- Araldite^{®} DY-E: (von Huntsman), Monoglycidylether von C₁₂- bis C₁₄-Alkoholen, EEW ca. 290 g/Eq
- Ancamine^{®} K 54: (von Air Products), 2,4,6-Tris(dimethylaminomethyl)phenol
- Vestamin^{®} TMD: (von Evonik), 2,2,4- und 2,4,4-Trimethylhexamethylendiamin, AHEW 39.6 g/Eq
- Dytek^{®} A: (von Invista),1,5-Diamino-2-methylpentan, AHEW 29.0 g/Eq
- Vestamin^{®} IPD: (von Evonik), 3-Aminomethyl-3,5,5-trimethyl-cyclohexyldiamin (Isophorondiamin), AHEW 42.6 g/Eq
- 1,3-BAC: (von Mitsubishi Gas Chemical), 1,3-Bis(aminomethyl)cyclohexan, AHEW 35.5 g/Eq
- MXDA: (von Mitsubishi Gas Chemical), 1,3-Bis(aminomethyl)benzol
- Gaskamine^{®} 240: (von Mitsubishi Gas Chemical), styrolisiertes 1,3-Bis(amino-methyl)benzol, AHEW ca. 103 g/Eq
- Jeffamine^{®} D-230: (von Huntsman), Polyoxypropylendiamin mit mittlerem Molekulargewicht ca. 240 g/mol, AHEW 60 g/Eq
- Jeffamine^{®} RFD- 270: (von Huntsman), cycloaliphatisches ethergruppenhaltiges Diamin aus der Propoxylierung und nachfolgenden Aminierung von 1,4-Dimethylolcyclohexan, mittleres Molekulargewicht ca. 270 g/mol, AHEW 67 g/Eq

### 3. Herstellung von Addukten:

Addukt **A-1:**
   165.7 g (1.05 mol) Vestamin^{®} TMD wurden vorgelegt und aufgewärmt. Unter Stickstoffatomsphäre und gutem Rühren wurden bei einer Temperatur von 80 °C innerhalb von 2 Stunden langsam 182.0 g (1.00 mol) Araldite^{®} DY-K zugegeben, wobei darauf geachtet wurde, dass die Temperatur der Reaktionsmischung nicht über 85 °C stieg. Die Reaktionsmischung wurde während 2 Stunden bei 80°C belassen, anschliessend auf 23 °C abgekühlt und verschlossen aufbewahrt. Es wurde eine klare, leicht gelbliche Flüssigkeit mit einer Viskosität von 9.7 Pa·s, einer Aminzahl von 341.5 mg KOH/g und einem theoretischen AHEW von ca. 109.1 g/Eq erhalten.
Addukt **A-2:**
   Wie für Addukt A-1 beschrieben wurden 186.1 g (1.18 mol) Vestamin^{®} TMD mit 182.0 g (1.00 mol) Araldite^{®} DY-K umgesetzt. Es wurde eine klare, leicht gelbliche Flüssigkeit mit einer Viskosität von 4.8 Pa·s, einer Aminzahl von 361.8 mg KOH/g und einem theoretischen AHEW von ca. 99.4 g/Eq erhalten.
Addukt **A-3:**
   Wie für Addukt A-1 beschrieben wurden 186.1 g (1.10 mol) Vestamin^{®} TMD mit 182.0 g (1.00 mol) Araldite^{®} DY-K umgesetzt. Es wurde eine klare, leicht gelbliche Flüssigkeit mit einer Viskosität von 6.9 Pa·s, einer Aminzahl von 351.3 mg KOH/g und einem theoretischen AHEW von ca. 104.2 g/Eq erhalten.
Addukt **A-4:** (Vergleich)
   Wie für Addukt A-1 beschrieben wurden 116.0 g (1.00 mol) Dytek^{®} A mit 200.2 g (1.10 mol) Araldite^{®} DY-K umgesetzt. Es wurde eine klare, leicht gelbliche Flüssigkeit mit einer Viskosität von 13.1 Pa·s, einer Aminzahl von 355 mg KOH/g und einem theoretischen AHEW von ca. 109.1 g/Eq erhalten.
Addukt **A-5:** (Vergleich)
   Wie für Addukt A-1 beschrieben wurden 116.0 g (1.00 mol) Dytek^{®} A mit 182.0 g (1.00 mol) Araldite^{®} DY-K umgesetzt. Es wurde eine klare, leicht gelbliche Flüssigkeit mit einer Viskosität von 5.8 Pa·s, einer Aminzahl von 377 mg KOH/g und einem theoretischen AHEW von ca. 99.4 g/Eq erhalten.
Addukt **A-6:** (Vergleich)
   Wie für Addukt A-1 beschrieben wurden 127.6 g (1.10 mol) Dytek^{®} A mit 182.0 g (1.00 mol) Araldite^{®} DY-K umgesetzt. Es wurde eine klare, leicht gelbliche Flüssigkeit mit einer Viskosität von 3.1 Pa·s, einer Aminzahl von 401 mg KOH/g und einem theoretischen AHEW von ca. 91.1 g/Eq erhalten.
Addukt **A-7:** (Vergleich)
   Wie für Addukt A-1 beschrieben wurden 187.4 g (1.10 mol) Vestamin^{®} IPD mit 182.0 g (1.00 mol) Araldite^{®} DY-K umgesetzt. Es wurde eine klare, leicht gelbliche, hochviskose Flüssigkeit mit einer Viskosität, gemessen bei 40 °C, von 17.5 Pa·s, einer Aminzahl von 340 mg KOH/g und einem theoretischen AHEW von ca. 108.7 g/Eq erhalten.
Addukt **A-8:** (Vergleich)
   Wie für Addukt A-1 beschrieben wurden 156.4 g (1.10 mol) 1,3-BAC mit 182.0 g (1.00 mol) Araldite^{®} DY-K umgesetzt. Es wurde eine klare, leicht gelbliche Flüssigkeit mit einer Viskosität von 59.4 Pa·s, einer Aminzahl von 369 mg KOH/g und einem theoretischen AHEW von ca. 99.5 g/Eq erhalten.
4. Herstellung von hydrierten Aminen

### benzyliertes MXDA:

In einem Rundkolben wurden 17.0 g (0.16 mol) Benzaldehyd und 13.6 g (0.10 mol) MXDA unter Stickstoffatmosphäre in ausreichend Isopropanol gelöst. Die Lösung wurde während 30 Minuten bei 23°C gerührt und anschliessend bei einem Wasserstoff-Druck von 80 bar, einer Temperatur von 80°C und einem Fluss von 3 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die Lösung im Vakuum bei 80°C eingeengt. Erhalten wurde ein klares, gelbliches Öl mit einer Viskosität von 0.1 Pa·s bei 20°C, einer Aminzahl von 416.8 mg KOH/g und einem theoretischen AHEW von ca. 115.5 g/Eq.

### ehylhexyliertes MXDA:

Auf die gleiche Weise wie für das benzylierte MXDA beschrieben wurden 25.6 g (0.20 mol) 2-Ethylhexanal und 13.6 g (0.10 mol) MXDA umgesetzt. Erhalten wurde eine klare, leicht gelbliche Flüssigkeit mit einer Viskosität von 140 mPa·s bei 20 °C, einer Aminzahl von 308.6 mg KOH/g und einem theoretischen AHEW von ca. 180.3 g/Eq.

### 5. Herstellung von Härtern und Epoxidharz-Zusammensetzungen

Für jedes Beispiel wurden die in den Tabellen 1 bis 4 angegebenen Inhaltsstoffe in den angegebenen Mengen (in Gewichtsteilen) der Härter-Komponente mittels eines Zentrifugalmischers (SpeedMixer™ DAC 150, FlackTek Inc.) vermischt und unter Ausschluss von Feuchtigkeit aufbewahrt.

Ebenso wurden die in den Tabellen 1 bis 4 angegebenen Inhaltsstoffe der Harz-Komponente verarbeitet und aufbewahrt.

Anschliessend wurden die beiden Komponenten jeder Zusammensetzung mittels des Zentrifugalmischers zu einer homogenen Flüssigkeit verarbeitet und diese unverzüglich folgendermassen geprüft:
10 Minuten nach dem Vermischen wurde die Viskosität bei 20°C bestimmt **("Viskosität (10')").**

Ein erster Film wurde in einer Schichtdicke von 500 µm auf eine Glasplatte aufgezogen und dieser bei 23±1 °C und 50±5 % relativer Feuchtigkeit (= Normklima, im folgenden abgekürzt mit "NK") gelagert, beziehungsweise ausgehärtet. An diesem Film wurde die **Königshärte** (Pendelhärte nach König, gemessen nach DIN EN ISO 1522) nach 2 Tagen ("Königshärte (NK) (2d)"), nach 4 Tagen ("Königshärte (NK) (4d)"), nach 7 Tagen ("Königshärte (NK) (7d)") und entweder nach 4 Wochen ("Königshärte (NK) (4w)") oder nach 14 Tagen ("Königshärte (NK) (14d)") bestimmt. Nach 14 Tagen wurde der Aspekt des Films beurteilt (in der Tabelle mit "Aspekt (NK)" bezeichnet). Als "schön" wurde dabei ein Film bezeichnet, welcher klar war und eine glänzende und nichtklebrige Oberfläche ohne Struktur aufwies. Als "Struktur" wird dabei jegliche Art von Zeichnung oder Muster auf der Oberfläche bezeichnet.

Ein zweiter Film wurde in einer Schichtdicke von 500 µm auf eine Glasplatte aufgezogen und dieser unmittelbar nach dem Applizieren während 7 Tagen bei 8 °C und 80 % relativer Feuchtigkeit und anschliessend während 3 Wochen im NK gelagert, beziehungsweise ausgehärtet. 24 Stunden nach der Applikation wurde ein Flaschendeckel aus Polypropylen auf den Film aufgesetzt, unter welchem ein feuchtes Schwämmchen platziert war. Nach weiteren 24 Stunden wurde das Schwämmchen und der Deckel entfernt und an einer neuen Stelle des Films platziert, wo es nach 24 Stunden wieder entfernt und neu platziert wurde, insgesamt 4 mal. Anschliessend wurde der Aspekt dieses Films beurteilt (in den Tabellen mit "Aspekt (8°/80%)" bezeichnet), auf die gleiche Weise wie für den Aspekt (NK) beschrieben. Dabei wurde jeweils auch die Anzahl Markierungen angegeben, die im Film durch das feuchte Schwämmchen und/ oder den aufgesetzten Deckel sichtbar waren. An den so ausgehärteten Filmen wurde wiederum die Königshärte bestimmt, jeweils nach 7 Tagen bei 8 °C und 80 % relativer Feuchtigkeit ("Königsh. (7d 8°/80%)"), dann nach weiteren 2 Tagen im NK ("Königsh. (+2d NK)"), 7 Tagen im NK ("Königsh. (+7d NK)") und teilweise auch nach 3 Wochen im NK ("Königsh. (+3w NK)").

Die Resultate sind in den Tabellen 1 bis 4 angegeben.

Bei den Epoxidharz-Zusammensetzungen ***EZ-1*** bis ***EZ-13*** handelt es sich um erfindungsgemässe Beispiele. Bei den Epoxidharz-Zusammensetzungen ***Ref-1*** bis ***Ref-11*** handelt es sich um Vergleichsbeispiele.

**Tabelle 1: Zusammensetzung und Eigenschaften von EZ-1 bis EZ-3 und Ref-1 bis Ref-3. "I." steht für "leicht"**

| **Beispiel** | | | ***EZ-1*** | ***Ref-1*** | ***EZ-2*** | ***Ref-2*** | ***EZ-3*** | ***Ref-3*** |
|---|---|---|---|---|---|---|---|---|
| **Harz-Komp.:** | | | | | | | | |
| | Araldite^{®} GY-250 | | 167.2 | 167.2 | 167.2 | 167.2 | 167.2 | 167.2 |
| | Araldite^{®} DY-E | | 31.8 | 31.8 | 31.8 | 31.8 | 31.8 | 31.8 |
| **Härter-Komp.:** | | | | | | | | |
| | | Addukt | **A-1** | **A-4** | **A-1** | **A-4** | **A-1** | **A-4** |
| | | | 109.1 | 109.1 | 65.5 | 65.5 | 65.5 | 65.5 |
| | Jeffamine^{®} D-230 | | - | - | 24.0 | 24.0 | - | - |
| | Jeffamine^{®} RFD-270 | | - | - | - | - | 26.8 | 26.8 |
| | Ancamine^{®} K 54 | | 6.2 | 6.2 | 5.8 | 5.8 | 5.8 | 5.8 |
| Viskosität (10') [Pa·s] | | | 3.5 | 4.1 | 1.2 | 1.4 | 1.7 | 2.2 |
| Königshärte | | (2d NK) | 158 | 172 | 154 | 131 | 186 | 179 |
| [s] | | (4d NK) | 179 | 192 | 189 | 143 | 206 | 192 |
| | | (7d NK) | 185 | 202 | 204 | 192 | 218 | 209 |
| | | (4w NK) | 208 | 209 | 213 | 210 | 217 | 215 |
| Aspekt (NK) | | | schön, hoher Glanz | I. Schlieren, wenig Glanz | schön, hoher Glanz | I. Struktur, wenig Glanz | schön, hoher Glanz | schön, hoher Glanz |
| Königsh. (7d 8°/80%) | | | 62 | 68 | 49 | 55 | 73 | 78 |
| [s] | | (+2d NK) | 160 | 165 | 164 | 150 | 180 | 175 |
| | | (+7d NK) | 183 | 192 | 204 | 189 | 210 | 189 |
| | | (+3w NK) | 203 | 206 | 208 | 201 | 212 | 204 |
| Aspekt (8°/80%) | | | schön, | I. matt, | schön, | I. Struktur, | schön, | I. matt, |
| | | | hoher | wenig | hoher | wenig | hoher | wenig |
| | | | Glanz; | Glanz; | Glanz; | Glanz; | Glanz; | Glanz; |
| Anzahl Markierungen | | | keine | 1 | 1 | 1 | keine | 1 |

**Tabelle 2: Zusammensetzung und Eigenschaften von EZ-4 bis EZ-6 und Ref-4 bis Ref-6. "I." steht für "leicht"**

| **Beispiel** | | | ***EZ-4*** | ***Ref-4*** | ***EZ-5*** | ***Ref-5*** | ***EZ-6*** | ***Ref-6*** |
|---|---|---|---|---|---|---|---|---|
| **Harz-Komp.:** | | | | | | | | |
| | Araldite^{®} GY-250 | | 167.2 | 167.2 | 167.2 | 167.2 | 167.2 | 167.2 |
| | Araldite^{®} DY-E | | 31.8 | 31.8 | 31.8 | 31.8 | 31.8 | 31.8 |
| **Härter-Komp.:** | | | | | | | | |
| | | Addukt | **A-2** | **A-5** | **A-2** | **A-5** | **A-2** | **A-5** |
| | | | 99.4 | 99.4 | 59.6 | 59.6 | 59.6 | 59.6 |
| | Jeffamine^{®} D-230 | | - | - | 24.0 | 24.0 | - | - |
| | Jeffamine^{®} RFD-270 | | - | - | - | - | 26.8 | 26.8 |
| | Ancamine^{®} K 54 | | 6.0 | 6.0 | 5.7 | 5.7 | 5.7 | 5.7 |
| Viskosität (10') [Pa·s] | | | 2.7 | 3.1 | 1.1 | 1.1 | 1.6 | 1.6 |
| Königshärte | | (2d NK) | 164 | 186 | 161 | 150 | 186 | 182 |
| [s] | | (4d NK) | 176 | 199 | 189 | 163 | 206 | 202 |
| | | (7d NK) | 186 | 209 | 201 | 189 | 215 | 212 |
| | | (4w NK) | 203 | 215 | 209 | 210 | 216 | 214 |
| Aspekt (NK) | | | schön, hoher Glanz | I. matt, wenig Glanz | schön, hoher Glanz | I. Struktur, wenig Glanz | schön, hoher Glanz | I. trüb, wenig Glanz |
| Königsh. (7d 8°/80%) | | | 64 | 73 | 52 | 49 | 67 | 76 |
| [s] | | (+2d NK) | 155 | 161 | 158 | 148 | 178 | 167 |
| | | (+7d NK) | 197 | 180 | 186 | 172 | 196 | 189 |
| | | (+3w NK) | 201 | 202 | 201 | 199 | 204 | 209 |
| Aspekt (8°/80%) | | | I. matt, wenig Glanz; | I. matt, wenig Glanz; | schön, hoher Glanz; | I. matt, wenig Glanz; | schön, hoher Glanz; | I. matt, wenig Glanz; |
| Anzahl Markierungen | | | 1 | 1 | 1 | 1 | keine | keine |

**Tabelle 3: Zusammensetzung und Eigenschaften von EZ-7 bis EZ-12 und Ref-7 und Ref-8. "I." steht für "leicht"; "ethylhexyliert." steht für "ethylhexyl iertes"**

| **Beispiel** | | | ***EZ-7*** | ***Ref-7*** | ***EZ-8*** | ***Ref-8*** | ***EZ-9*** | ***EZ-10*** | ***EZ-11*** | ***EZ-12*** |
|---|---|---|---|---|---|---|---|---|---|---|
| **Harz-Komp.:** | | | | | | | | | | |
| | Araldite^{®} GY-250 | | 167.2 | 167.2 | 167.2 | 167.2 | 167.2 | 167.2 | 167.2 | 167.2 |
| | Araldite^{®} DY-E | | 31.8 | 31.8 | 31.8 | 31.8 | 31.8 | 31.8 | 31.8 | 31.8 |
| **Härter-Komp.:** | | | | | | | | | | |
| | | Addukt | **A-2** | **A-5** | **A-2** | **A-5** | **A-1** | **A-1** | **A-1** | **A-1** |
| | | | 59.6 | 59.6 | 59.6 | 59.6 | 65.5 | 65.5 | 43.6 | 54.6 |
| | Gaskamine^{®} 240 | | 36.1 | 36.1 | - | - | 36.1 | - | 20.6 | - |
| | benzyliertes MXDA | | - | - | 40.4 | 40.4 | - | 40.4 | - | - |
| | ethylhexyliert. MXDA | | - | - | - | - | - | - | - | 21.6 |
| | Jeffamine^{®} D-230 | | - | - | - | - | - | - | 24.0 | - |
| | Jeffamine^{®} RFD-270 | | - | - | - | - | - | - | - | 25.5 |
| | Ancamine^{®} K 54 | | 5.9 | 5.9 | 6.0 | 6.0 | 6.1 | 6.2 | 5.7 | 6.0 |
| Viskosität (10') [Pa·s] | | | 1.4 | 1.6 | 1.0 | 1.3 | 1.7 | 1.3 | 0.97 | 0.87 |
| Königshärte | | (2d NK) | 141 | 132 | 171 | 140 | 151 | 162 | 136 | 126 |
| [s] | | (4d NK) | 165 | 176 | 192 | 164 | 176 | 183 | 180 | 157 |
| | | (7d NK) | 189 | 196 | 204 | 193 | 195 | 195 | 203 | 176 |
| | | (4w NK) | 211 | 207 | 214 | 210 | 203 | 209 | 215 | 193 |
| Aspekt (NK) | | | schön, hoher Glanz | I. trüb, wenig Glanz | schön, hoher Glanz | schön, hoher Glanz | schön, hoher Glanz | schön, hoher Glanz | schön, hoher Glanz | schön, hoher Glanz |
| Königsh. (7d 8°/80%) | | | 56 | 66 | 64 | 69 | 59 | 62 | 47 | 51 |
| [s] | | (+2d NK) | 146 | 162 | 162 | 169 | 153 | 158 | 152 | 130 |
| | | (+7d NK) | 190 | 189 | 197 | 195 | 187 | 192 | 193 | 168 |
| | | (+3w NK) | 203 | 201 | 207 | 205 | 204 | 204 | 202 | 182 |
| Aspekt (8°/80%) | | | schön, hoher Glanz; | I. trüb, wenig Glanz; | schön, hoher Glanz; | I. trüb, wenig Glanz; | schön, hoher Glanz; | schön, hoher Glanz; | schön, hoher Glanz; | schön, hoher Glanz; |
| Anzahl Markierungen | | | keine | keine | keine | keine | keine | keine | keine | keine |

**Tabelle 4: Zusammensetzung und Eigenschaften von EZ-13 und Ref-9 bis Ref-11.**

| **Beispiel** | | | ***EZ***-***13*** | ***Ref-9*** | ***Ref-10*** | ***Ref-11*** |
|---|---|---|---|---|---|---|
| **Harz-Komp.:** | | | | | | |
| | Araldite^{®} GY-250 | | 167.2 | 167.2 | 167.2 | 167.2 |
| | Araldite^{®} DY-E | | 31.8 | 31.8 | 31.8 | 31.8 |
| **Härter-Komp.:** | | | | | | |
| | | Addukt | **A-3** | **A-6** | **A-7** | **A-8** |
| | | | 62.5 | 54.7 | 65.2 | 59.7 |
| | Jeffamine^{®} D-230 | | 24.0 | 24.0 | 24.0 | 24.0 |
| | Ancamine^{®} K 54 | | 5.7 | 5.6 | 5.8 | 5.7 |
| Viskosität (10') [Pa·s] | | | 1.2 | 1.0 | 2.7 | 1.8 |
| Königshärte | | (2d NK) | 148 | 130 | 174 | 181 |
| [s] | | (4d NK) | 189 | 171 | 214 | 192 |
| | | (7d NK) | 195 | 192 | 225 | 21.9 |
| | | (14d NK) | 209 | 197 | 227 | 220 |
| Aspekt (NK) | | | schön, hoher Glanz | matt, feine Blasen | schön, hoher Glanz | leichte Struktur, matt |
| Königsh. (7d 8°/80%) | | | 42 | 32 | 62 | 76 |
| [s] | | (+2d NK) | 157 | 106 | 197 | 155 |
| | | (+7d NK) | 189 | 157 | 220 | 193 |
| Aspekt (8°/80%) | | | schön, hoher Glanz; | matt/trüb; | schön, hoher Glanz; | matt; |
| Anzahl Markierungen | | | 1 | 2 | 1 | 1 |

## Patentansprüche

1. Härter, geeignet zum Aushärten von Epoxidharzen, enthaltend mindestens ein Addukt aus Trimethylhexamethylendiamin und Kresylglycidylether.

2. Härter gemäss Anspruch 1, **dadurch gekennzeichnet, dass** das Trimethylhexamethylendiamin 2,2,4-Trimethyl-1,6-hexandiamin oder 2,4,4-Trimethyl-1,6-hexandiamin oder ein Gemisch dieser Isomeren darstellt.

3. Härter gemäss einem der Ansprüche 1 oder 2, **dadurch gekennzeichnet, dass** der Kresylglycidylether ortho-Kresylglycidylether darstellt.

4. Härter einem der Ansprüche 1 bis 3, **dadurch gekennzeichnet, dass** das Addukt hergestellt wird durch die Umsetzung von Trimethylhexamethylendiamin und Kresylglycidylether in einem Molverhältnis Trimethylhexamethylendiamin -Moleküle/Kresylglycidylether-Moleküle im Bereich von 0.9 bis 2.0.

5. Härter gemäss einem der Ansprüche 1 bis 4, **dadurch gekennzeichnet, dass** neben dem Addukt zusätzlich mindestens ein weiteres Polyamin mit mindestens zwei gegenüber Epoxidgruppen aktiven Aminwasserstoffen vorhanden ist.

6. Härter gemäss Anspruch 5, **dadurch gekennzeichnet, dass** es sich bei dem weiteren Polyamin um ein Polyamin mit mindestens zwei primären aliphatischen Aminogruppen handelt.

7. Härter gemäss Anspruch 6, **dadurch gekennzeichnet, dass** das Polyamin mit mindestens zwei primären aliphatischen Aminogruppen ausgewählt ist aus der Gruppe bestehend aus Isophorondiamin, 1,3-Bis(aminomethyl)cyclohexan, 1,4-Bis(aminomethyl)cyclohexan, Bis(4-aminocyclohexyl)methan, Bis(4-amino-3-methylcyclohexyl)methan, 2,5(2,6)-Bis(aminomethyl)bicyclo[2.2.1]heptan, 3(4),8(9)-Bis(aminomethyl)tricyclo[5.2.1.0^{2,6}]-decan, 1,3-Bis(aminomethyl)benzol und Ethergruppen-haltigen Polyaminen mit einem mittleren Molekulargewicht bis zu 500 g/mol.

8. Härter gemäss Anspruch 5, **dadurch gekennzeichnet, dass** es sich bei dem weiteren Polyamin um ein Polyamin mit mindestens einer sekundären Aminogruppe handelt.

9. Härter gemäss Anspruch 8, **dadurch gekennzeichnet, dass** das Polyamin mit mindestens einer sekundären Aminogruppe ausgewählt ist aus der Gruppe bestehend aus N-monoalkyliertem und N,N'-dialkyliertem 1,6-Hexandiamin, 1,5-Diamino-2-methylpentan, 1,3-Bis(aminomethyl)cyclohexan, 1,4-Bis(aminomethyl)cyclohexan, 1,3-Bis(aminomethyl)benzol, Bis-(hexamethylen)triamin, Diethylentriamin, Triethylentetramin, Tetraethylenpentamin, Dipropylentriamin, N-(2-Aminoethyl)-1,3-propandiamin und N,N'-Bis(3-aminopropyl)ethylendiamin, mit den Alkylgruppen Benzyl, 2-Phenylethyl, Isobutyl, Hexyl oder 2-Ethylhexyl.

10. Härter gemäss einem der Ansprüche 5 bis 9, **dadurch gekennzeichnet, dass** 5 bis 90% der gegenüber Epoxidgruppen reaktiven Aminwasserstoffe im Härter vom Addukt stammen.

11. Härter gemäss einem der Ansprüche 1 bis 10, **dadurch gekennzeichnet, dass** der Gehalt an nicht einbaubaren Verdünnern weniger als 25 Gewichts-% beträgt.

12. Epoxidharz-Zusammensetzung enthaltend mindestens ein Epoxidharz und einen Härter gemäss einem der Ansprüche 1 bis 11.

13. Epoxidharz-Zusammensetzung gemäss Anspruch 12, **dadurch gekennzeichnet, dass** sie eine zweikomponentige Zusammensetzung ist, bestehend aus
(i) einer Harz-Komponente enthaltend mindestens ein Epoxidharz und
(ii) einer Härter-Komponente enthaltend den Härter gemäss einem der Ansprüche 1 bis 11.

14. Ausgehärtete Zusammensetzung erhalten aus der Aushärtung einer Zusammensetzung gemäss einem der Ansprüche 12 oder 13.

15. Artikel enthaltend eine ausgehärtete Zusammensetzung, gemäss Anspruch 14.

## Claims

1. A curing agent, suitable for curing epoxy resins, containing at least one adduct of trimethylhexamethylenediamine and cresyl glycidyl ether.

2. The curing agent according to claim 1, **characterized in that** the trimethylhexamethylenediamine is 2,2,4-trimethyl-1,6-hexanediamine or 2,4,4-trimethyl-1,6-hexanediamine or a mixture of these isomers.

3. The curing agent according to one of claims 1 or 2, **characterized in that** the cresyl glycidyl ether is ortho-cresyl glycidyl ether.

4. The curing agent of one of claims 1 to 3, **characterized in that** the adduct is produced by reacting trimethylhexamethylenediamine and cresyl glycidyl ether in a molar ratio of trimethylhexamethylenediamine molecules/cresyl glycidyl ether molecules in the range of 0.9 to 2.0.

5. The curing agent according to one of claims 1 to 4, **characterized in that** in addition to the adduct, additionally at least one further polyamine with at least two amine hydrogens active toward epoxide groups is present.

6. The curing agent according to claim 5, **characterized in that** the additional polyamine is a polyamine with at least two primary aliphatic amino groups.

7. The curing agent according to claim 6, **characterized in that** the polyamine with at least two primary aliphatic amino groups is selected from the group consisting of isophorone diamine, 1,3-bis(aminomethyl)cyclohexane, 1,4-bis(aminomethyl)cyclohexane, bis(4-aminocyclohexyl)methane, bis(4-amino-3-methylcyclohexyl)methane, 2,5(2,6)-bis(aminomethyl)bicyclo[2.2.1]heptane, 3(4),8(9)-bis(aminomethyl)tricyclo[5.2.1.0^{2,6}]decane, 1,3-bis(aminomethyl)benzene and ether group-containing polyamines with an average molecular weight of up to 500 g/mol.

8. The curing agent according to claim 5, **characterized in that** the additional polyamine is a polyamine with at least one secondary amino group.

9. The curing agent according to claim 8, **characterized in that** the polyamine with at least one secondary amino group is selected from the group consisting of N-monoalkylated and N,N'-dialkylated 1,6-hexanediamine, 1,5-diamino-2-methylpentane, 1,3-bis(aminomethyl)cyclohexane, 1,4-bis(aminomethyl)cyclohexane, 1,3-bis(aminomethyl)benzene, bis(hexamethylene)triamine, diethylenetriamine, triethylenetetramine, tetraethylenepentamine, dipropylenetriamine, N-(2-aminoethyl)-1,3-propanediamine and N,N'-bis(3-aminopropyl)ethylenediamine, with the alkyl groups benzyl, 2-phenylethyl, isobutyl, hexyl or 2-ethylhexyl.

10. The curing agent according to one of claims 5 to 9, **characterized in that** 5 to 90% of the amine hydrogens reactive toward epoxide groups in the curing agent originate from the adduct.

11. The curing agent according to one of claims 1 to 10, **characterized in that** the content of non-incorporatable diluents is less than 25 wt.-%.

12. An epoxy resin composition containing at least one epoxy resin and a curing agent according to one of claims 1 to 11.

13. The epoxy resin composition according to claim 12, **characterized in that** it is a two-component composition consisting of
(i) a resin component containing at least one epoxy resin and
(ii) a curing agent component containing the curing agent according to one of claims 1 to 11.

14. A cured composition obtained from curing a composition according to one of claims 12 or 13.

15. An article containing a cured composition according to claim 14.

## Revendications

1. Durcisseur, approprié pour le durcissement de résines époxydes, contenant au moins un produit d'addition de triméthylhexaméthylènediamine et de crésylglycidyléther.

2. Durcisseur selon la revendication 1, **caractérisé en ce que** la triméthylhexaméthylènediamine est la 2,2,4-triméthyl-1,6-hexanediamine ou la 2,4,4-triméthyl-1,6-hexanediamine ou un mélange de ces isomères.

3. Durcisseur selon l'une quelconque des revendications 1 ou 2, **caractérisé en ce que** le crésylglycidyléther est l'ortho-crésylglycidyléther.

4. Durcisseur selon l'une quelconque des revendications 1 à 3, **caractérisé en ce que** le produit d'addition est préparé par la transformation de triméthylhexaméthylènediamine et de crésylglycidyléther dans un rapport molaire de molécules de triméthylhexaméthylènediamine/molécules de crésylglycidyléther dans la plage de 0,9 à 2,0.

5. Durcisseur selon l'une quelconque des revendications 1 à 4, **caractérisé en ce qu'**en plus du produit d'addition, au moins une autre polyamine présentant au moins deux hydrogènes de fonction amine, actifs par rapport aux groupes époxydes, est en outre présente.

6. Durcisseur selon la revendication 5, **caractérisé en ce qu'**il s'agit, pour l'autre polyamine, d'une polyamine comprenant au moins deux groupes amino aliphatiques primaires.

7. Durcisseur selon la revendication 6, **caractérisé en ce que** la polyamine comprenant au moins deux groupes amino aliphatiques primaires est choisie dans le groupe constitué par l'isophoronediamine, le 1,3-bis(aminométhyl)cyclohexane, le 1,4-bis(aminométhyl)cyclohexane, le bis(4-aminocyclohexyl)méthane, le bis(4-amino-3-méthylcyclohexyl)méthane, le 2,5(2,6)-bis(aminométhyl)bicyclo[2,2,1]heptane, le 3(4),8(9)-bis(aminométhyl)tricyclo[5,2,1,0^{2,6}]-décane, le 1,3-bis(aminométhyl)benzène et les polyamines contenant des groupes éther présentant un poids moléculaire allant jusqu'à 500 g/mole.

8. Durcisseur selon la revendication 5, **caractérisé en ce qu'**il s'agit, pour l'autre polyamine, d'une polyamine comprenant au moins un groupe amino secondaire.

9. Durcisseur selon la revendication 8, **caractérisé en ce que** la polyamine comprenant au moins un groupe amino secondaire est choisie dans le groupe constitué par la 1,6-hexanediamine, le 1,5-diamino-2-méthylpentane, le 1,3-bis(aminométhyl)cyclohexane, le 1,4-bis(aminométhyl)cyclohexane, le 1,3-bis(aminométhyl)benzène, la bis-(hexaméthylène)triamine, la diéthylènetriamine, la triéthylènetétraamine, la tétraéthylènepentaamine, la dipropylènetriamine, la N-(2-aminoéthyl)-1,3-propanediamine et la N,N'-bis(3-aminopropyl)éthylènediamine, N-monoalkylés et N,N'-dialkylés par les groupes alkyle benzyle, 2-phényléthyle, isobutyle, hexyle ou 2-éthylhexyle.

10. Durcisseur selon l'une quelconque des revendications 5 à 9, **caractérisé en ce que** 5 à 90% des hydrogènes de fonction amine réactifs par rapport aux groupes époxydes dans le durcisseur proviennent du produit d'addition.

11. Durcisseur selon l'une quelconque des revendications 1 à 10, **caractérisé en ce que** la teneur en diluants non incorporables est inférieure à 25% en poids.

12. Composition de résine époxyde contenant au moins une résine époxyde et un durcisseur selon l'une quelconque des revendications 1 à 11.

13. Composition de résine époxyde selon la revendication 12, **caractérisée en ce qu'**il s'agit d'une composition à deux composants, constituée par
(i) un composant de résine, contenant au moins une résine époxyde et
(ii) un composant durcisseur, contenant le durcisseur selon l'une quelconque des revendications 1 à 11.

14. Composition durcie obtenue à partir du durcissement d'une composition selon l'une quelconque des revendications 12 à 13.

15. Objet, contenant une composition durcie selon la revendication 14.
